# EUROPEAN PATENT SPECIFICATION

(11) **EP 0 653 892 B1**
(45) Date of publication and mention of the grant of the patent: **26.09.2001**
(21) Application number: 94203268.1
(22) Date of filing: 09.11.1994
(51) Int. Cl.: H04Q 1/14

(54) **Method for pulling a wire by means of a pilot wire**
Verfahren zum Ziehen von einem Draht mittels eines Pilotdrahtes
Méthode pour tirer un fil au moyen d'un fil pilote

(30) Priority: 16.11.1993 NL 9301976
(43) Date of publication of application: 17.05.1995
(73) Proprietor: Koninklijke KPN N.V., 9726 AE Groningen (NL)
(72) Inventor: Termaat, Johan, NL-7334 BG Apeldoorn (NL)

(56) References cited:
- EP-A- 0 219 918
- FR-A- 2 275 916
- FR-A- 2 648 300
- FR-A- 2 665 043

## Description

The invention relates to a method for pulling a wire by means of a pilot wire wherein said wire is to be fastened to a fastening point of the said pilot wire.

Such a method is generally known, in the case of which one end of the pilot wire usually serves as the fastening point to which the wire to be pulled is fastened, and the other end of the pilot wire is then pulled. Due to the fact that the pilot wire can often be installed more simply at a particular point than the wire to be pulled, the wire to be pulled can then be pulled in an equally simple manner to the point in question. Of course, various wires to be pulled can also be pulled simultaneously by means of one pilot wire.

One of the disadvantages of such a known method is that installing the pilot wire at some points takes about the same effort as installing the wire to be pulled without pilot wire (for example in main distribution frames in telephone exchanges), so that in this case the use of the pilot wire is not worthwhile.

The object of the invention is, inter alia, to provide a method of the above-mentioned type mentioned in which, while it takes about the same effort to install the pilot wire as to install the wire without pilot wire, it is still worthwhile to use the pilot wire.

To this end, the method according to the invention is characterized in that the said pilot wire comprises fixed ends and the method comprises the step of fastening the said pilot wire to the fastening point which lies between the said fixed ends.

Due to the fact that the pilot wire has fixed ends, the pilot wire need be installed only once, following which it can be used repeatedly for pulling wires. Thanks to the fixed or immovable ends, a pilot wire which has been pulled as much as possible to one end can always be pulled back again from the other end. For this purpose, the length of the pilot wire could, for example, be considerably greater than the distance between the points where the ends are fixed, for example twice as great, in which case the fastening point lying between the fixed ends could lie halfway along the pilot wire. In this way, at a first point the fastening point is moved to said first point by exerting forces on the pilot wire, and the wire or wires to be pulled is or are fastened to the fastening point in the vicinity of the first point, following which at a second point the fastening point is moved to said second point by exerting forces on the pilot wire, in which case the wire or wires to be pulled is or are moved with it. The wire or wires to be pulled is or are then detached from the fastening point in the vicinity of the second point, following which the pilot wire can be used again immediately for pulling the next wire or wires.

The invention is, inter alia, based on the idea that, once installed, the repeated use of a pilot wire for pulling wires produces a cost saving on wages which amply counterbalances the additional expense of one pilot wire, and that this applies in particular to places where the installation of the pilot wire takes about the same effort as installing the wire to be pulled without pilot wire.

A first embodiment of the method according to the invention is characterized in that the pilot wire comprises an elongated loop, ends of the elongated loop each comprising one of the fixed ends.

If the pilot wire is in the form of an elongated loop, the ends of which loop are wound around, for example, wheels or shafts, said wheels or shafts form the fixed ends of the pilot wire. In particular if the wheels or shafts are provided with bearings, this first embodiment of the method according to the invention requires less exertion of forces, and even provides the possibility of motorized wire-pulling.

A second embodiment of the method according to the invention is characterized in that the pilot wire is elastic.

If the pilot wire is in the form of an elongated loop, the ends of which loop are wound around, for example, wheels or shafts, in the case of an elastically formed pilot wire, it is possible to deviate from the shortest conceivable line between the ends, which is a great advantage during the fastening and detachment of a wire to be pulled.

If the pilot wire is not in the form of a loop, because of its elastic nature, the length of the pilot wire need no longer be appreciably greater than the distance between the points where the ends are fixed (when not tensioned), but it will be sufficient to fix the pilot wire slightly tensioned. With a minimum elasticity of 100%, a fastening point situated in the centre will just be able to reach a fixed end, and as the elasticity increases, the fastening point will be able to lie further from the centre or, in the vicinity of one end, will be able to deviate further from the shortest conceivable line between the ends. This possibility of deviating from the shortest conceivable line between the ends is a great advantage during the fastening and detachment of a wire to be pulled. There is also the advantage that when, at a first point not coinciding with the centre, the fastening point is moved to said first point by exerting forces on the elastic pilot wire, after the wire or wires to be pulled is or are fastened to the fastening point in the vicinity of the first point, the fastening point and the wire or wires fastened thereto then automatically move back to the centre, due to the elastic force of the elastic pilot wire. After this, at a second point, the fastening point is moved to said second point, by exerting forces on the elastic pilot wire, during which the wire or wires to be pulled is or moved with it and then, after the wire or wires to be pulled is or are detached, the fastening point automatically moves back to the centre.

A third embodiment of the method according to the invention for pulling the wire from a first point to a second point, which embodiment illustrates the method according to the invention in greater detail, is characterized in that in succession:
- in the vicinity of a first point, the fastening point is moved to the first point,
- the wire to be pulled is fastened to this fastening point,
- in the vicinity of a second point, the fastening point is moved to the second point, and
- the wire to be pulled is detached from the fastening point of the pilot wire.

The movement to the first point and to the second point can be not only in essentially parallel directions (for example, in the case of wall distribution frames) and in essentially anti-parallel directions (for example, in the case of main distribution frames), but also in essentially non-parallel directions. Moreover, in one situation the first and second points can each be situated at a different side of the fastening point, and in another situation the first and second points can both be situated at one side of the fastening point.

If the fastening point is made variable, for example slidable, it is possible to situate this fastening point temporarily at another point of a pilot wire, for example at the second point (at the position of a place to which many wires have to be pulled in succession). In this case then, in the vicinity of this second point, the fastening point need no longer be moved to this second point, due to the fact that the fastening point is already situated (in rest) in the vicinity of this second point.

The invention also relates to a pilot wire for pulling a wire to be fastened to a fastening point of the pilot wire.

The pilot wire according to the invention is characterized in that the pilot wire has fixed ends, the fastening point of the pilot wire being situated between the fixed ends.

A first embodiment of the pilot wire according to the invention is characterized in that the pilot wire comprises an elongated loop, ends of the elongated loop each comprising one of the fixed ends.

A second embodiment of the pilot wire according to the invention is characterized in that the pilot wire is elastic.

The invention also relates to an apparatus for holding wires, which are pulled according to the method of the invention' comprising means for passing through the said wires.

The apparatus according to the invention is characterized in that the apparatus is provided with a pilot wire for pulling a wire to be fastened to a fastening point of the said pilot wire, which pilot wire comprises fixed ends, the fastening point of the said pilot wire being situated between the fixed ends.

A first exemplary embodiment of the apparatus according to the invention is characterized in that the pilot wire comprises an elongated loop, ends of the elongated loop each comprising one of the fixed ends.

A second embodiment of the apparatus according to the invention is characterized in that the pilot wire is elastic.

The fastening point could be achieved by making a knot in the pilot wire. Fastening points are also conceivable in the form of a sort of wire connector coupled to the pilot wire, in which wire connector the wires to be pulled can be temporarily fastened in a simple manner, and fastening points are conceivable in the form of a ring which may or may not interrupt the pilot wire, and which could be coupled by means of shafts to the pilot wire, in order to prevent the ring from turning with the pilot wire. The use of a ring as the fastening point also provides the possibility of placing the ring around a pin, which means that it is no longer necessary in the case of an elastic pilot wire to keep exerting forces on the pilot wire during the fastening of the wires to be pulled to the ring and the detachment of the wires to be pulled from the ring. If the pilot wire is provided in different colours or provided with other different markings to the left and right of the fastening point, particularly in apparatuses with a jumble of wires in which the fastening point is thus not easy to see, it is now everywhere immediately clear what part of the pilot wire is situated there, which is important for the pulling direction. In the case of apparatuses with different horizontal tiers, it is advantageous to install one pilot wire per tier, and it is a further advantage then to make the pilot wires in different colours or provide them with other different markings for each tier.

In the case of large apparatuses, ten to sixty metres long, elastic pilot wires will have a tendency to twist. In particular, if the wires to be pulled are coming off reels, these wires will increase this twisting effect and will tend to wind around the elastic pilot wire, which is, of course, a disadvantage. This can be prevented by using flat elastic pilot wires, which by their nature have much less of a tendency to twist. Moreover, an auxiliary guide situated parallel to the pilot wire (elastic or otherwise) could be used, in which case the fastening point is coupled rigidly or otherwise to the auxiliary guide. The auxiliary guide is preferably then itself also slightly elastic, and/or its ends are fixed in an elastic manner. The invention will be explained in greater detail with reference to an exemplary embodiment shown in the figure, in which:

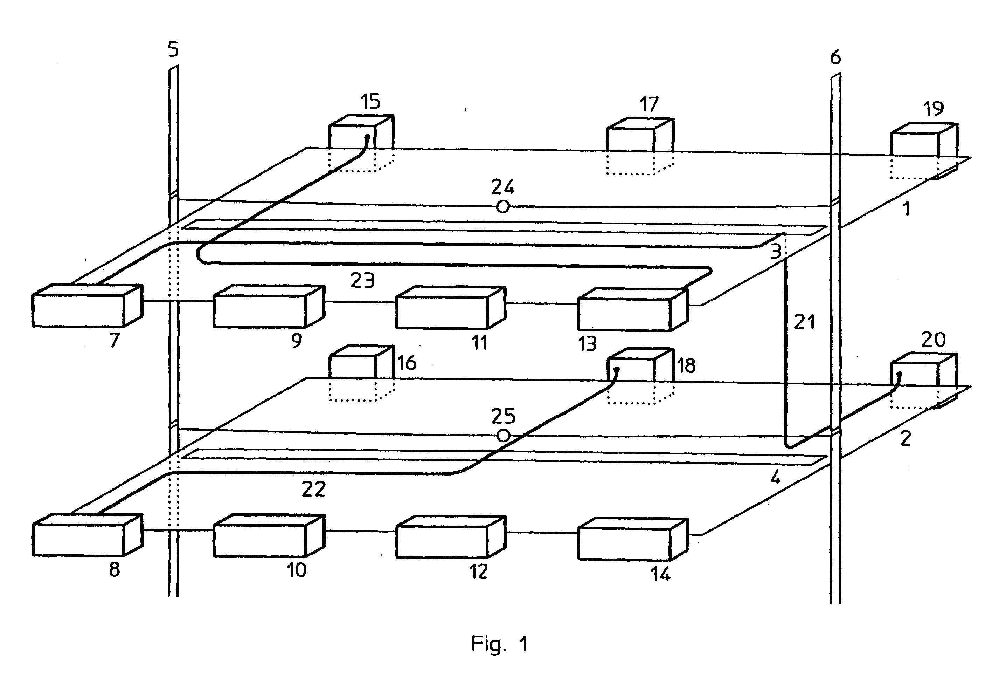

Fig. 1 shows an apparatus for holding wires pulled through use of the method according to the invention.

The apparatus shown in Fig. 1 for holding wires, for example a main distribution frame in a telephone exchange, can consist of a number of tiers, two of which are shown. The first tier comprises a rectangular plate 1, in which a slit 3 is disposed in the centre along the longitudinal axis, for passing through the wires vertically. The second tier comprises a rectangular plate 2, in which a slit 4 is disposed in the centre along the longitudinal axis, for passing through the wires vertically. Both plates 1, 2 are fastened at different heights between two vertical columns 5, 6. Plate 1 has along one long side four horizontal blocks 7, 9, 11, 13 and along the other long side three square blocks 15, 17, 19. Plate 2 has along one long side four horizontal blocks 8, 10, 12, 14 and along the other long side three square blocks 16, 18, 20. The purpose of all horizontal blocks 7-14 is to connect the main distribution frame to the exchange for each telephone number, and the purpose of all square blocks 15-20 (also called vertical blocks) is to connect the main distribution frame to subscribers for each telephone number. All this is achieved by means of wires (not shown in Fig. 1) which are situated between the exchange and the horizontal blocks, and by means of wires (not shown in Fig. 1) which are situated between the square blocks and the subscribers. So, for each telephone number one square block 15, 16, 17, 18, 19 or 20 must be connected to one horizontal block 7, 8, 9, 10, 11, 12, 13 or 14 by means of one or more wires to be pulled. Until now, this was carried out by manually installing a wire to be pulled, in which case two people had to work together. In particular in the case of large main distribution frames (with, for example, six tiers lying between half a metre and three metres high, and sixty metres long, one and a half metres deep and having very many already pulled wires) this process was very labour-intensive. The main distribution frame shown in Fig. 1 also has a pilot wire 24 belonging to plate 1 and a pilot wire 25 belonging to plate 2. Both pilot wires 24, 25 are made of elastic material (elasticity at least 100%, preferably greater, for example 150%), having a fastening point in the form of a ring in the centre, and are fastened between the vertical columns 5, 6 and consequently have fixed ends.

For the sake of simplicity, only three pulled wires are present in Fig. 1: wire 21, situated between horizontal block 7 and square block 20, wire 22 situated between horizontal block 8 and square block 18, and wire 23 situated between horizontal block 13 and square block 15. In practice, in a telephone exchange which is in use, plates 1, 2 will be full of wires, and so many wires will pass through slits 3, 4 (to higher and lower tiers) that one long side of a plate 1, 2 cannot be seen from the other long side.

Due to the presence of elastic pilot wire 24, wire 21 could be installed in a very simple and not very labour-intensive manner. While wire 21, as part of a longer wire, is still on a reel, one end thereof is guided along the square block 20 and guided from below through slit 3 to the tier belonging to plate 1. This end is then pulled slightly (by someone in the vicinity of horizontal block 13 (or square block 19)) in the direction of horizontal block 13, and pilot wire 24 is also pulled in the direction of horizontal block 13 (or square block 19) until the ring of pilot wire 24 is in the vicinity of horizontal block 13 (or square block 19) (to this end, the elasticity of elastic pilot wire 24 must be greater than 100%). The end of wire 21 is then fastened to said ring, following which the pilot wire is paid out. This will cause the ring of pilot wire 24 and the end of wire 21 fastened thereto to move back to the centre of plate 1. Pilot wire 24 is then pulled (by someone in the vicinity of horizontal block 7) in the direction of horizontal block 7, until the ring of pilot wire 24 and the end of the wire 21 fastened thereto are situated in the vicinity of horizontal block 7. Following this, said end is detached from the ring, and said end can be fastened to horizontal block 7. Releasing the ring will cause it to move back to the centre of plate 1. At the position of square block 20, wire 21 can be cut off from the part still on the reel and fastened to square block 20.

Thanks to the presence of elastic pilot wire 25, wire 22 could be installed as follows in a very simple and not very labour-intensive manner. While wire 22 is still on a reel as part of a longer wire, one end thereof is guided along the square block 18 and guided from there to the other side of plate 2. This end is then pulled slightly in the direction of horizontal block 12 (by someone in the vicinity of horizontal block 12), and pilot wire 25 is also pulled in the direction of horizontal block 12 until the ring of pilot wire 25 is situated in the vicinity of horizontal block 12. The end of wire 22 is then fastened to this ring, following which the pilot wire is paid out. The ring of pilot wire 25 and the end of wire 22 fastened thereto will consequently move back to the centre of plate 2. Pilot wire 25 is then pulled (by someone in the vicinity of horizontal block 8) in the direction of horizontal block 8 until the ring of pilot wire 25 and the end of wire 22 fastened thereto are situated in the vicinity of horizontal block 8. After this, said end is detached from the ring, and said end can be fastened to horizontal block 8. Releasing the ring will cause it to move back to the centre of plate 2. At the position of square block 18, wire 22 can be cut off from the part still on the reel and fastened to square block 18. Instead of guiding wire 22 to the other side of plate 2, it is, of course, also conceivable for pilot wire 25 to be pulled in the direction of square block 18 (by someone in the vicinity of square block 18) until the ring of pilot wire 25 is situated in the vicinity of square block 18, following which the end of wire 22 is fastened to said ring, etc.

Thanks to the presence of elastic pilot wire 24, wire 23 could be installed as follows in a very simple and not very labour-intensive manner. While wire 23 is still on a reel as part of a longer wire, one end thereof is guided along the square block 15 and is guided from there to the other side of plate 1. This end is then pulled slightly in the direction of horizontal block 7 (by someone in the vicinity of horizontal block 7), and pilot wire 24 is also pulled in the direction of horizontal block 7 until the ring of pilot wire 24 is situated in the vicinity of horizontal block 7 (to this end, the elasticity of elastic pilot wire 24 must be greater than 100%). The end of wire 23 is then fastened to this ring, following which the pilot wire is paid out. The ring of pilot wire 24 and the end of wire 23 fastened thereto will consequently move back to the centre of plate 1. Pilot wire 24 is then pulled (by someone in the vicinity of horizontal block 13) in the direction of horizontal block 13 until the ring of pilot wire 24 and the end of the wire 23 fastened thereto are situated in the vicinity of horizontal block 13. After this, said end is detached from the ring, and said end can be fastened to horizontal block 13. Releasing the ring will cause it to move back to the centre of plate 1. At the position of square block 15, wire 23 can be cut off from the part still on the reel and fastened to square block 15. Instead of guiding wire 23 to the other side of plate 1, it is, of course, also conceivable for pilot wire 24 to be pulled in the direction of square block 15 (by someone in the vicinity of square block 15) until the ring of pilot wire 24 is situated in the vicinity of square block 15, following which the end of wire 23 is fastened to said ring, etc.

Of course, the reel can also be used at the side where the horizontal blocks lie, or wires already cut to size can be used. Moreover, the elastic pilot wire does not necessarily have to be fixed between the vertical columns, but can also be placed more in the direction of the horizontal or square blocks. The pilot wire can also be designed in an alternative way, for example as a non-elastic wire of a length which is at least twice the length of a plate (so that a fastening point situated in the centre can reach both fixed ends), or as an elongated loop, the ends of which are wound around wheels or shafts, and a fastening point of which can thus reach both ends through routing of the loop.

If an apparatus according to the invention for holding wires is designed with plates lying above one another, in which horizontal blocks and square blocks are situated on the side of all first long sides of the plates, and in which all second long sides of the plates are situated against a wall, this is not called a main distribution frame, but a wall distribution frame. Yet other apparatuses according to the invention for holding wires are, for example, horizontal and vertical cable trenches. The method according to the invention can be used advantageously in the case of all the abovementioned apparatuses.

## Claims

1. A method for pulling a wire by means of a pilot wire wherein said wire is to be fastened to a fastening point of the said pilot wire, **characterized in that** the said pilot wire comprises fixed ends and the method comprises the step of fastening the said pilot wire to the fastening point which lies between the said fixed ends.

2. The method as claimed in claim 1, **characterized in that** the said pilot wire comprises an elongated loop, ends of the elongated loop each comprising one of the fixed ends.

3. The method as claimed in claims 1 or 2, **characterized in that** the said pilot wire is elastic.

4. The method as claimed in claims 2 or 3 for pulling the wire from a first point to a second point, **characterized in that** in succession:
- in the vicinity of a first point, the fastening point is moved to the first point,
- the wire to be pulled is fastened to this fastening point,
- in the vicinity of a second point, the fastening point is moved to the second point, and
- the wire to be pulled is detached from the fastening point of the pilot wire.

5. A pilot wire for pulling a wire to be fastened to a fastening point of the pilot wire, **characterized in that** the said pilot wire comprises fixed ends, the fastening point of the said pilot wire being situated between the fixed ends.

6. The pilot wire as claimed in claim 5, **characterized in that** the said pilot wire comprises an elongated loop, ends of the elongated loop each comprising one of the fixed ends.

7. The pilot wire as claimed in claims 5 or 6,
**characterized in that** the said pilot wire is elastic.

8. An apparatus for holding wires which are pulled according to the method as claimed in any one of claims 1-4, comprising means for passing through the said wires,
**characterized in that** the apparatus is provided with a pilot wire for pulling a wire to be fastened to a fastening point of the said pilot wire, which pilot wire comprises fixed ends, the fastening point of the said pilot wire being situated between the fixed ends.

9. The apparatus as claimed in claim 8, **characterized in that** the said pilot wire comprises an elongated loop, ends of the elongated loop each comprising one of the fixed ends.

10. The apparatus as claimed in claims 8 or 9, **characterized in that** the said pilot wire is elastic.

## Patentansprüche

1. Verfahren zum Ziehen eines Drahtes mittels eines Pilotdrahtes, wobei der besagte Draht an einem Befestigungspunkt des besagten Pilotdrahtes zu befestigen ist, **dadurch gekennzeichnet, dass** der besagte Pilotdraht feste Enden aufweist und dass das Verfahren den Schritt der Befestigung des besagten Drahtes an dem Befestigungspunkt umfasst, der zwischen den besagten festen Enden liegt.

2. Verfahren nach Anspruch 1, **dadurch gekennzeichnet, dass** der besagte Pilotdraht eine verlängerte Schleife umfasst, wobei die Enden der verlängerten Schleife jeweils eines der festen Enden umfassen.

3. Verfahren nach Anspruch 1 oder 2, **dadurch gekennzeichnet, dass** der besagte Pilotdraht elastisch ist.

4. Verfahren nach Anspruch 2 oder 3 zum Ziehen des Drahtes vom einem ersten Punkt zu einem zweiten Punkt, **dadurch gekennzeichnet, dass** aufeinanderfolgen:
- dass in der Umgebung eines ersten Punktes der Befestigungspunkt zu dem ersten Punkt bewegt wird,
- dass der zu ziehende Draht an diesem Befestigungspunkt befestigt wird,
- dass in der Umgebung eines zweiten Punktes der Befestigungspunkt zu dem zweiten Punkt hingezogen wird, und
- dass der zu ziehende Draht von dem Befestigungspunkt des Pilotdrahtes gelöst wird.

5. Pilotdraht zum Ziehen eines zu befestigenden Drahtes zu einem Befestigungspunkt des Pilotdrahtes hin, **dadurch gekennzeichnet, dass** der besagte Pilotdraht feste Enden aufweist, wobei der Befestigungspunkt des besagten Pilotdrahtes zwischen den befestigten Enden angeordnet ist.

6. Pilotdraht nach Anspruch 5, **dadurch gekennzeichnet, dass** der Pilotdraht eine verlängerte Schleife umfasst, wobei die Enden der verlängerten Schleife jeweils eines der festen Enden umfassen.

7. Pilotdraht nach Anspruch 5 oder 6, **dadurch gekennzeichnet, dass** der Pilotdraht elastisch ist.

8. Vorrichtung zum Halten von Drähten, die gemäss dem Verfahren nach einem der Ansprüche 1 bis 4 gezogen sind, mit Mitteln zum Hindurchführen der besagten Drähte, **dadurch gekennzeichnet, dass** die Vorrichtung versehen ist mit einem Pilotdraht zum Ziehen eines zu befestigenden Drahtes zu einem Befestigungspunkt des besagten Pilotdrahtes hin, wobei der Pilotdraht feste Enden umfasst, und der Befestigungspunkt des besagten Pilotdrahtes zwischen den befestigten Enden angeordnet ist.

9. Vorrichtung nach Anspruch 8, **dadurch gekennzeichnet, dass** der Pilotdraht eine verlängerte Schleife umfasst, wobei die Enden der verlängerten Schleife jeweils eines der festen Enden umfassen.

10. Vorrichtung nach Anspruch 8 oder 9, **dadurch gekennzeichnet, dass** der Pilotdraht elastisch ist.

## Revendications

1. Procédé de traction d'un fil au moyen d'un fil pilote, dans lequel ledit fil doit être fixé sur un point de fixation dudit fil pilote, **caractérisé en ce que** ledit fil pilote comporte des extrémités fixes et le procédé comprend l'étape de fixation dudit fil sur le point de fixation qui s'étend entre lesdites extrémités fixes.

2. Procédé selon la revendication 1, **caractérisé en ce que** ledit fil pilote comprend une boucle allongée, les extrémités de la boucle allongée comportant chacune une des extrémités fixes.

3. Procédé selon la revendication 1 ou 2, **caractérisé en ce que** ledit fil pilote est élastique.

4. Procédé selon la revendication 2 ou 3 de traction du fil depuis un premier point vers un deuxième point, **caractérisé en ce que**, à la suite :
- au voisinage d'un premier point, le point de fixation est déplacé vers le premier point,
- le fil devant être tiré est fixé sur ce point de fixation,
- au voisinage d'un deuxième point, le point de fixation est déplacé vers le deuxième point, et
- le fil devant être tiré est détaché du point de fixation du fil pilote.

5. Fil pilote pour la traction d'un fil devant être fixé sur un point de fixation du fil pilote, **caractérisé en ce que** ledit fil pilote comporte des extrémités fixes, le point de fixation dudit fil pilote étant situé entre les extrémités fixes.

6. Fil pilote selon la revendication 5, **caractérisé en ce que** ledit fil pilote comprend une boucle allongée, les extrémités de la boucle allongée comportant chacune une des extrémités fixes.

7. Fil pilote selon la revendication 5 ou 6, **caractérisé en ce que** ledit fil pilote est élastique.

8. Appareil destiné à retenir des fils qui sont tirés selon le procédé selon l'une quelconque des revendications 1 à 4, comportant des moyens pour le passage desdits fils, **caractérisé en ce que** l'appareil est pourvu d'un fil pilote pour la traction d'un fil devant être fixé sur un point de fixation dudit fil pilote, lequel fil pilote comporte des extrémités fixes, le point de fixation dudit fil pilote étant situé entre les extrémités fixes.

9. Appareil selon la revendication 8, **caractérisé en ce que** ledit fil pilote comprend une boucle allongée, les extrémités de la boucle allongée comportant chacune une des extrémités fixes.

10. Appareil selon la revendication 8 ou 9, **caractérisé en ce que** ledit fil pilote est élastique.
